# EUROPÄISCHE PATENTSCHRIFT

(11) **EP 1 841 957 B1**
(45) Veröffentlichungstag und Bekanntmachung des Hinweises auf die Patenterteilung: **18.01.2012**
(21) Anmeldenummer: 05847504.7
(22) Anmeldetag: 18.11.2005
(51) Int. Cl.: F01N 3/20, B01D 53/94

(54) **VORRICHTUNG ZUR NACHBEHANDLUNG VON ABGASEN**
DEVICE FOR SUBSEQUENTLY TREATING EXHAUST GASES
DISPOSITIF POUR LE POST-TRAITEMENT DE GAZ D'ECHAPPEMENT

(30) Priorität: 17.01.2005 DE 102005002317
(43) Veröffentlichungstag der Anmeldung: 10.10.2007
(73) Patentinhaber: ROBERT BOSCH GMBH, 70442 Stuttgart (DE)
(72) Erfinder: PAPE, Werner, 70184 Stuttgart (DE); GOLDMANN, Cornelia, 74391 Erligheim (DE); EGGERT, Torsten, 70839 Gerlingen (DE); STRAUCH, Armin, 71701 Schwieberdingen (DE); LEONHARD, Max, 82054 Sauerlach (DE); OYRER, Andreas, A-5020 Salzburg (AT); KOVACIC, Oliver, A-5400 Hallein (AT)
(86) Internationale Anmeldenummer: PCT/EP2005/056065
(87) Internationale Veröffentlichungsnummer: WO 2006/074836

(56) Entgegenhaltungen:
- WO-A-02/43837
- DE-A1- 4 230 056
- DE-A1- 4 441 261
- DE-A1- 19 726 392
- DE-A1- 19 946 901

## Beschreibung

### Stand der Technik

Die Erfindung geht aus von einer Vorrichtung zum Nachbehandeln von Abgasen einer Brennkraftmaschine nach der Gattung des unabhängigen Anspruchs. Es ist schon eine derartige Vorrichtung aus der DE 199 46 901 bekannt, bei der in einem in ein Abgasrohr hineinragenden Dosierrohr eine Drossel angeordnet ist.

### Vorteile der Erfindung

Die erfindungsgemäße Vorrichtung mit den kennzeichnenden Merkmalen des unabhängigen Anspruchs hat demgegenüber den Vorteil, dass in einfacher Weise eine Möglichkeit geschaffen wird, das Reaktionsmittel bzw. die kristallisationsbildende Flüssigkeit untereinander bzw. mit einem Transportgas so zu vermischen, dass eine lokale Übersättigung des reaktiven Bestandteils des Reaktionsmittels verhindert und somit dessen Kristallisation vermieden werden kann. Als weiterer Vorteil ist anzusehen, dass hierbei der Durchfluss des Reaktionsmittels durch Leitungen bzw. reaktionsmittelführende Bereiche nicht oder nur unwesentlich beeinträchtigt wird. In vorteilhafter Weise wird hierbei nicht nur eine Verengung des Strömungsquerschnitts infolge Auskristallisation, sondern auch eine Verstopfung der Einbringungsstelle bzw. der Leitungen vermieden. Wird eine Verengung verhindert, muss der Transportdruck des Reaktionsmittels bzw. des Transportgases nicht erhöht werden, um eine bestimmte Menge an Reaktionsmittel dem Abgas zuzuführen bzw. um weiterhin eine Auskristallisation zu vermeiden. Das Dosiersystem wird insgesamt robuster hinsichtlich in der Praxis auftretender Schwankungen bei den Betriebsparametern. Insbesondere sind in vorteilhafter Weise auch kleinere Mengen an Reaktionsmittel, insbesondere an Harnstoff-Wasser-Lösung, einspritzbar, ohne eine Auskristallisation mit der Folge eines eventuellen Lahmlegens des gesamten Systems zu provozieren. Darüber hinaus können mit der erfindungsgemäßen Anordnung auch zukünftige Abgasnormen, die eine feiner abzustimmende Dosierung mit kleineren Toleranzen der Reaktionsmittelmenge erfordern, erfüllt werden. Ferner können in vorteilhafter Weise Mengenschwankungen aufgrund von Teilverstopfungen bzw. zäher werdendem Reaktionsmittel infolge Kristallbildung und Wiederauflösen derselben verringert werden

Durch die in den abhängigen Ansprüchen aufgeführten Maßnahmen sind vorteilhafte Weiterbildungen und Verbesserungen der im unabhängigen Anspruch angegebenen Abgasnachbehandlungsvorrichtung möglich.

Besonders vorteilhaft ist es hierbei, eine positive Störkontur nahe der Einbringungsstelle vorzusehen. Dies sichert in vorteilhafter Weise eine dauerhafte Durchgängigkeit dieser Stelle, damit zu jedem Zeitpunkt Reaktionsmittel in den Abgastrakt eingebracht werden kann.

Ein Störkörper wie beispielsweise eine Spirale ist ein einfach einfügbares Bauteil, das in vorteilhafter Weise auch über größere Längen in Leitungen eingebracht werden und so lange Leitungsstrecken vor Kristallisation schützen kann.

Weitere Vorteile ergeben sich aus den weiteren in den weiteren abhängigen Ansprüchen und in der Beschreibung genannten Merkmalen.

Ausführungsbeispiele der Erfindung sind in der Zeichnung dargestellt und in der nachfolgenden Beschreibung näher erläutert. Es zeigen Figur 1 eine Vorrichtung zur Abgasnachbehandlung, Figur 2 ein Dosierrohr mit Spirale, Figur 3 ein Dosierrohr mit Gewindebereich, Figur 4 ein Dosierrohr mit Sprühkopf, Figur 5 ein weiteres Dosierrohr mit Sprühkopf und Figur 6 ein Dosierrohr mit einer Quetschung.

### Beschreibung der Ausführungsbeispiele

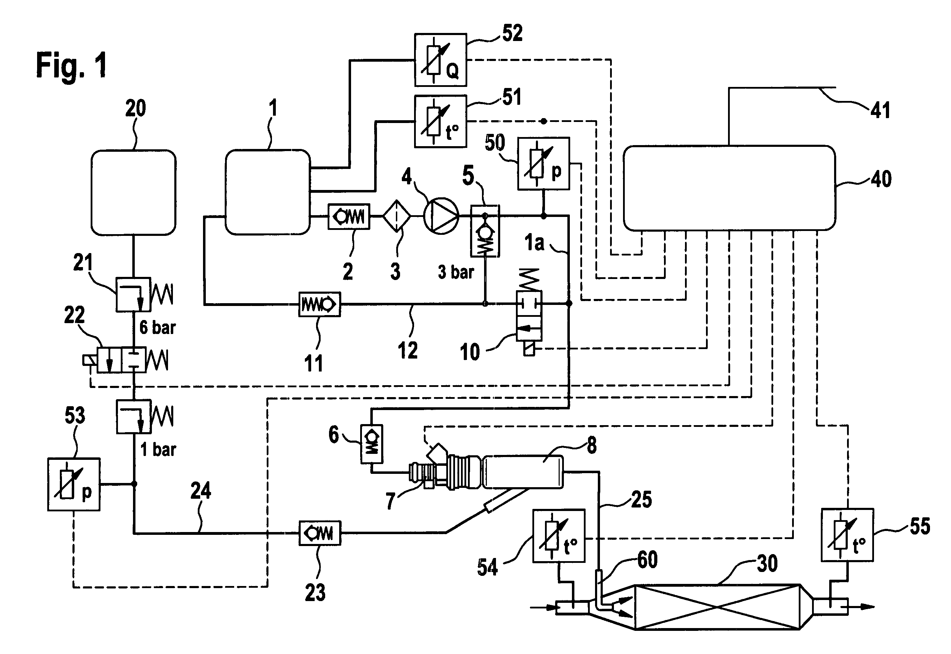

In Figur 1 ist eine Vorrichtung zur Nachbehandlung von Abgasen dargestellt. Mit 1 ist ein Harnstofftank bezeichnet, aus welchem eine Harnstoff Wasser-Lösung mit einem 32,5 %igem Harnstoffanteil über eine Leitung 1a, beispielsweise eine Schlauchleitung, mit einem Rückschlagventil 2 und einem als Filtersieb ausgeführten Filter 3 von einer Förderpumpe 4 angesaugt und über ein weiteres Rückschlagventil 6 zu einem Dosierventil 7 gefördert wird. Das Dosierventil 7 dosiert die erforderliche Menge an Harnstoff Wasser-Lösung in eine Mischkammer 8. Eine eventuell auftretende Überströmmenge der Harnstoff-Wasser-Lösung ist über einen Druckregler 5 und ein weiteres Rückschlagventil 11 durch eine Rücklaufleitung 12 in den Harnstofftank 1 zurückführbar. Eine eventuell notwendige Entlüftung der Leitung 1a ist über einen Entlüftungskreislauf mit einem Entlüftungsventil 10 durchführbar. Mit 20 ist ferner ein Druckluftbehälter bezeichnet, aus welchem Druckluft über einen Druckbegrenzer 21, ein 2/2-Wegeventil 22 und ein Rückschlagventil 23 in die Mischkammer einbringbar ist. Durch Vorsehen des Rückschlagventils 23, welches beispielsweise als Kugelventil oder Flachsitzventil ausgebildet sein kann, kann ein Rückströmen eines Reduktionsmittel-Luft-Gemisches aus der Mischkammer in die Druckluftleitung 24 hinaus verhindert werden. Hierdurch ist die Gefahr einer Kontamination eines mit der Druckluftleitung 24 kommunizierenden Druckluft-Bordnetzes gegenüber herkömmlichen Systemen stark reduziert.

In der Mischkammer 8 wird unter Beaufschlagung der Harnstoff Wasser-Lösung mittels der Druckluft ein Aerosol erzeugt, welches über eine Aerosolleitung 25 und ein in die Abgasleitung hineinragendes Dosierrohr 60 in einen Katalysator 30 eingebracht wird. Ein Steuergerät 40 erfaßt hierbei Signale, die von einem übergeordneten Motorsteuergerät über eine CAN-Datenleitung 41 empfangen werden, sowie die Signale von Druck-, Temperatur- bzw. Füllstandssensoren 50 bis 55, deren Funktionsweise an sich bekannt ist und hier nicht weiter erläutert wird. Das Steuergerät 40 berechnet aus diesen Informationen eine HarnstoffDosiermenge, welche einem den Katalysator 30 durchströmenden Abgas zugegeben werden soll.

Das Steuergerät 40 regelt mit Hilfe der beschriebenen Magnetventile den Druck in der Druckluftleitung 24 und überwacht ferner den Harnstoff-Wasser-Lösungsdruck. Das Steuergerät 40 erkennt Abweichungen und Fehler, speichert diese und bringt sie durch ein (nicht gezeigtes) Diagnosegerät, beispielsweise an einem PC, zur Anzeige.

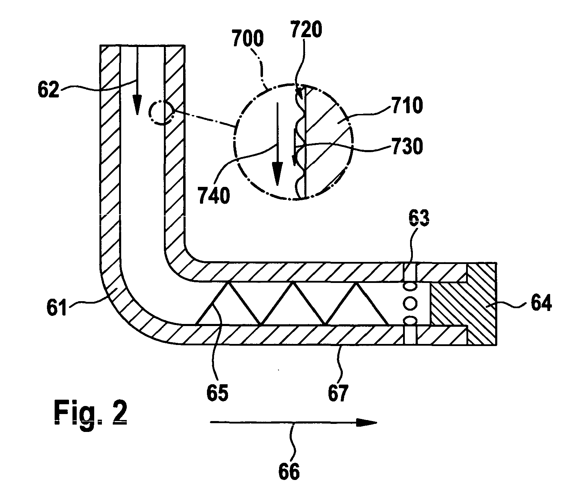

Figur 2 stellt den in eine nicht näher dargestellte Abgasleitung hineinragenden Teil eines Dosierrohrs 61 aus Edelstahl dar, das anstelle des in der Figur 1 abgebildeten Dosierrohrs 60 eingesetzt werden kann. Der Pfeil 62 kennzeichnet die Strömungsrichtung des Reaktionsmittels bzw. des Reaktionsmittel-Transportgas-Gemischs, beispielsweise einer Harnstoff-Wasser-Lösung, die druckluftunterstützt ins Dosierrohr eingebracht wird. Das Dosierrohr ist am stromabwärtigen Ende mit einem Verschlussstopfen 64 aus Edelstahl abgedichtet. Stromaufwärts des Verschlussstopfens 64 sind acht radial ausgerichtete Sprühlöcher 63 mit einem Durchmesser von typischerweise 0,5 Millimeter in der Wandung des Dosierrohrs angeordnet, die sich gleichmässig über den Umfang des Dosierrohrs verteilen. Das Dosierrohr weist eine Biegung um 90 Grad auf, so dass das senkrecht durch eine Wandung des Abgasrohrs hindurchtretende Dosierrohr einen parallel zur Abgasströmung 66 verlaufenden Abschnitt 67 aufweist. Eine Ausschnittsvergrößerung 700 zeigt einen an der Dosierrohr- bzw. Sprührohrwand 710 entlanglaufenden flüssigen Wandfilm 720, Pfeil 730 kennzeichnet dessen Strömungsrichtung. Der Pfeil 740 kennzeichnet die Strömungsrichtung eines sich ausbildenden aerosols bzw. der zum Transport und Zerstäubung des Reaktionsmittels verwendeten Druckluft. Im Abschnitt 67 des Dosierrohrs ist eine Spirale 65 aus Edelstahl eingebracht, die sich in einem den Sprühlöchern vorgelagerten Bereich erstreckt. Die Spirale besteht aus einem Edelstahldraht mit 0,15 Millimeter Durchmesser und berührt hierbei entsprechend ihrer dem Dosierrohrquerschnitt angepassten Kreisform mit ihrer Aussenseite kontinuierlich entlang einer spiralförmigen Linie die Innenwand des Dosierrohrs. Die Spirale ist hierbei an einem oder mehreren Punkten mit der Dosierrohrinnenwand verschweißt.

Bei der Anordnung nach Figur 1 bildet sich in der Leitung 25 nach der Vermischung des Reaktionsmittels mit Druckluft in der Mischkammer 8 zur Bildung eines Aerosols ein flüssiger Reaktionsmittel-Wandfilm aus, der sich auch im Dosierrohr 61 wellenförmig als Wandfilm 72 fortbewegt und beispielsweise bei einer Strömungsgeschwindigkeit von 1 m/s und einem Luftdruck von 1,5 bar eine Dicke von zirka 10 Mikrometer aufweist. Ein Teil weiterhin vorhandenen Aerosols sowie die Druckluft selbst bewegt sich (Strömungsrichtung 74) in der Mitte des Dosierrohrs fort. Die Harnstoff-Wasser-Lösung wird schließlich über die Sprühlöcher 63 quer zur Strömung 66 des Abgases in die Abgasleitung eingespritzt. Das strömende Abgas 66 hat eine Temperatur von beispielsweise 350 Grad Celsius. Die bei einem drucktuftunterstützlen System im Zentrum des Dosierrohrs strömende Druckluft erwärmt sich dabei auf zirka 60 Grad Celsius. Der sich ausbildende Temperaturgradient führt dann beispielsweise zu einer Temperatur an der Innenwandung des Dosierrohrs von 115 Grad Celsius. An der Innenwand des Dosierrohrs wandert der flüssige Wandfilm aus der Harnstoff-Wasser-Lösung entlang, und der direkt an der Rohrwand entlang laufende Wasseranteil der Lösung kann, unterstützt durch die trocknende Wirkung des in der Dosierrohrmitte strömenden Luftstroms, aus einer heißen Randschicht verdampfen, solange keine Maßnahmen getroffen werden, um dies zu verhindern. Verdampft nämlich das Wasser aus der heißen Randschicht, so stellt sich eine Übersättigung an Harnstoff in der Harnstoff-Wasser-Lösung ein und es besteht die Gefahr der Kristallisation des Harnstoffs, die zu einer Verengung des Strömungsquerschnitts, zu einem erforderlichen Druckanstieg zur Förderung einer bestimmten Harnstoffmenge und schließlich auch zur Verstopfung insbesondere der Sprühlöcher führen kann. Eine Verstopfung der Sprühlöcher wiederum kann dazu führen, dass die über das Druckluftsystem zugeführte Luft über das Dosierventil 7 (Fig. 1) in die Leitung 1a drückt, so dass nun auch hier, unterstützt durch die trocknende Wirkung der Luft, Kristallisation eintreten kann. Mit einer Erhöhung der Durchflussmenge an Harnstoff-Wasser-Lösung pro Zeiteinheit kann eine Kristallisation vermieden werden, dies geht jedoch zu Lasten der Dosiergenauigkeit und führt zu einem erhöhten Reduktionsmittelverbrauch. Bei Überdosierung wiederum entsteht ungewollter Ammoniak-Schlupf als Sekundäremission, der bei hoher Konzentration gesundheitsbeeinträchtigend sein kann. Daher ist erfindungsgemäß eine Spirale in dem Dosierrohr eingebracht, speziell in einem Bereich unmittelbar vor den Sprühlöchern, um auch diese vor einer Kristallisation von Harnstoff zu schützen. Der sich entlang der Innenwand des Dosierrohrs sich fortbewegende Wandfilm stößt in regelmässigen Abständen an die Spirale, was zu einer Durchmischung bzw. Aufwirbelung des Wandfilms führt. Der Spiralkörper ist eine Struktur mit einer positiven Störkontur, führt also zu einem zur Symmetrieachse des Dosierrohrs hinführendem Wandprofil, das heisst, er veranlasst den Wandfilmfluß aufgrund einer geringfügigen Verengung des Leitungsquerschnitts, sich innerhalb kurzer Zeit in Richtung Dosierrohrmitte zu bewegen, ohne jedoch im Wesentlichen den Gesamtfluß des Reaktionsmittels zu drosseln. Durch die Aufwirbelung werden umgekehrt auch kühlere, zunächst dem Innenbereich des Dosierrohrs zugewandte Abschnitte des Wandfilms nach außen in Richtung Innenwandung des Dosierrohrs gewälzt. Somit kühlt die der Innenwandung des Dosierrohrs unmittelbar benachbarte Randschicht des Wandfilms ab, die Gefahr der Wasserverdampfung und damit der Harnstoffübersättigung ist verringert, was wiederum zu einer geringeren Gefahr der Auskristallisation von Harnstoffbzw. an Reaktionsmittel führt. Durch diese einfache Maßnahme lässt sich insbesondere auch eine höhere Dosiergenauigkeit erzielen, weil kleinere Mengen an Harnstoff-Wasser-Lösung pro Zeit gefördert bzw. in die Abgasleitung eingebracht werden können, ohne in den kritischen Bereich der Harnstoffübersättigung und Auskristallisation zu gelangen, der das gesamte System lahm legen und eine Abgasentstickung außer Kraft setzen kann.

Der Verschlussstopfen 64 kann wahlweise statt als mit dem Dosierrohr verschweisster Pressstopfen auch als Stopfen ausgebildet sein, der mit Spiel, d.h. leicht, bei der Fertigung in das Dosierrohr einführbar ist und anschließend ebenfalls mit dem Dosierrohr verschweisst wird. Alternativ kann die Spirale auch mit Spiel in das Dosierrohr eingelegt werden, so dass sie durch Trägheitskräfte während der Fahrt sich darin hin und her bewegen und auf diese Art zeitlich nacheinander an verschiedenen Stellen als Durchmischer des Wandfilms dienen kann. Die Spirale kann auch das ganze Leitungssystem durchlaufend ausgebildet sein, bzw. es können mehrere Spiralen hintereinander, entweder beabstandet oder mit ihren Stirnseiten aneinander stoßend, in das Dosierrohr und/oder in die Leitungen bzw. in reaktionsmittelführende Bereiche eingebracht werden.

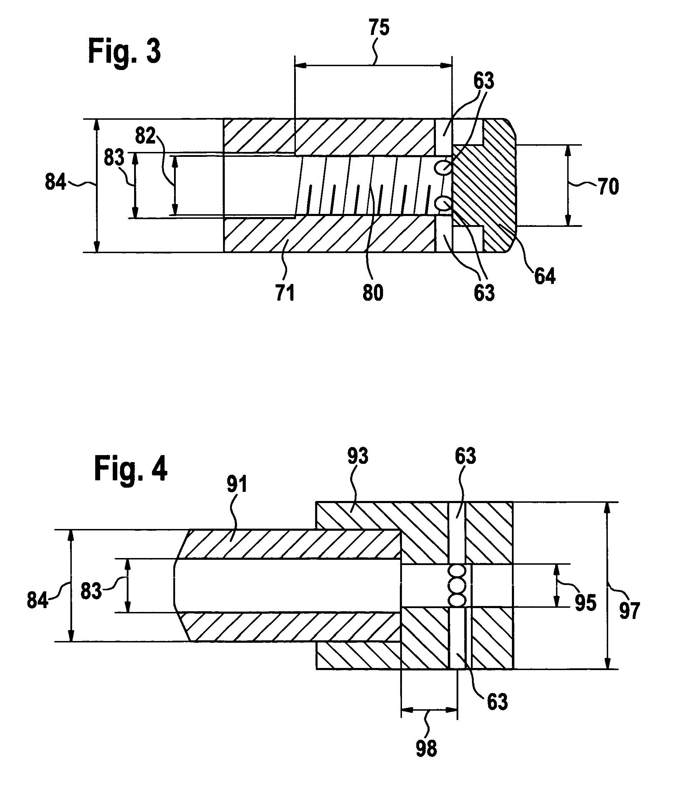

Figur 3 zeigt die erfindungsgemäße Ausführung eines Teils eines Dosierrohrs 71 aus Edelstahl, das anstelle eines in der Figur 1 dargestellten Dosierrohrs 60 verwendet werden kann. Dargestellt ist das stromabwärtige Ende des Dosierrohrs hinter der oben beschriebenen 90-Grad-Biegung, also der Abschnitt des Dosierrohrs, der parallel zur Abgasströmung 66 verläuft. Das Dosierrohr hat einen Aussendurchmesser 84 und bei seinem Eintritt in die Abgasleitung bis hinter der 90-Grad-Biegung einen Innendurchmesser 83. Das Dosierrohr ist an seinem stromabwärtigen Ende mit einem als Pressstopfen ausgebildeten und mit dem Dosierrohr verschweissten Verschlussstopfen 64 aus Edelstahl gas- und flüssigkeitsdicht verschlossen. Die Sprühlöcher 63 sind kurz vor dem Verschlussstopfen 64 radial in das Dosierrohr eingebracht zur Herstellung einer Strömungsverbindung zwischen dem Innenbereich des Dosierrohrs und dem außerhalb des Dosierrohrs strömenden Abgases. Der kreisförmige Strömungsquerschnitt im Innern des Dosierrohrs ist in einem Bereich stromaufwärts der Sprühlöcher leicht verengt, und zwar auf einen Querschnitt mit einem Innendurchmesser 82, der kleiner ist als der Innendurchmesser 83. Dieser Bereich wird durch ein in das Dosierrohr eingebrachtes Gewinde gebildet, so dass der Innendurchmesser 82 durch den Innendurchmesser des Gewindes gebildet ist (Durchmesser der gedanklich gerade noch in das Gewinde einschiebbaren eine Zylinderoberfläche bildenden Hüllfläche). Stromabwärts der Sprühlöcher schließt sich unmittelbar der Verschlussstopfen 64 an, der einen im Vergleich zum restlichen Dosierrohrquerschnitt aufgeweiteten Bereich mit einem Durchmesser 70 verschließt, der größer ist als der Innendurchmesser 83 des Dosierrohrs. Der Gewindebereich 80 erstreckt sich bis zu einer Entfernung 75 von der dem Innenraum des Dosierrohrs zugewandten Abschlussfläche des Verschlussstopfens. Der Aussendurchmesser 84 beträgt im Ausführungsbeispiel 4,1 Millimeter, der Innendurchmesser 83 2,2 Millimeter, der Innendurchmesser 82 im Gewindebereich 2,1 Millimeter, der Durchmesser 70 2,5 Millimeter und die Entfernung 75 9 Millimeter.

Der Gewindebereich 80 bildet im Dosierrohr 71 eine Struktur mit positiver Störkontur, die ähnlich wie ein an der Innenwand des Dosierrohrs aufliegender Spiralkörper gemäß Figur 2 zu einer Wandfilmverwirbelung führt und damit zur Verhinderung einer Kristallisation von Harnstoff beitragen kann.

Figur 4 zeigt eine alternative Ausführungsform eines Teils eines Dosierrohrs 91, bei dem gleiche oder ähnlich Bestandteile wie bei der in Figur 3 gezeigten Ausführung mit gleichem Bezugszeichen versehen sind und nicht nochmals beschrieben werden. Analog zum Dosierrohr 71 gemäß Figur 3 weist auch das Dosierrohr 91 eine Struktur mit positiver Störkontur auf, die sich auf einer Länge 98 vor den Sprühlöchern erstreckt. Sie ist durch einen Sprühkopf 93 des Dosierrohrs gebildet, der auf des Ende des Rohrteils 91 mit Außendurchmesser 84 und Innendurchmesser 83 aufgesetzt ist. Der Sprühkopf schließt das Rohrteil 91 an seiner Stirnseite ab und enthält die radial austretenden Sprühlochbohrungen 63. Den seitlichen Sprühlochbohrungen vorgelagert ist eine Kanalbohrung mit Durchmesser 95, der kleiner ist als der Innendurchmesser des Dosierrohrs. Diese Kanalbohrung verbindet den Innenraum des Rohrteils 91 mit den Sprühlöchern 63. Der Außendurchmesser 97 des Sprühkopfs ist größer als der Außendurchmesser des Rohrteils 91, das über eine Bohrung in den Sprühkopf eingeführt ist, so dass der Innenraum des Rohrteils 91, stufenförmig verengt, in die Kanalbohrung übergeht. Im Ausführungsbeispiel beträgt der Außendurchmesser 84 4,1 Millimeter, der Innendurchmesser 83 2,1 Millimeter, die Länge 98 0,5 Millimeter, der Bohrungsdurchmesser 95 1,7 Millimeter und der Außendurchmesser 97 des Sprühkopfs 6 Millimeter.

Der sich auf die Sprühlöcher zubewegende Wandfilm sieht im Bereich des Übergangs zwischen Rohrteil 91 und Sprühkopf 93 eine positive Störkontur, also ein zur Symmetrieachse des Dosierrohrs hinführendes Wandprofil, das zur Verwirbelung und Durchmischung und damit zur Vermeidung einer Harnstoffkristallisation beiträgt.

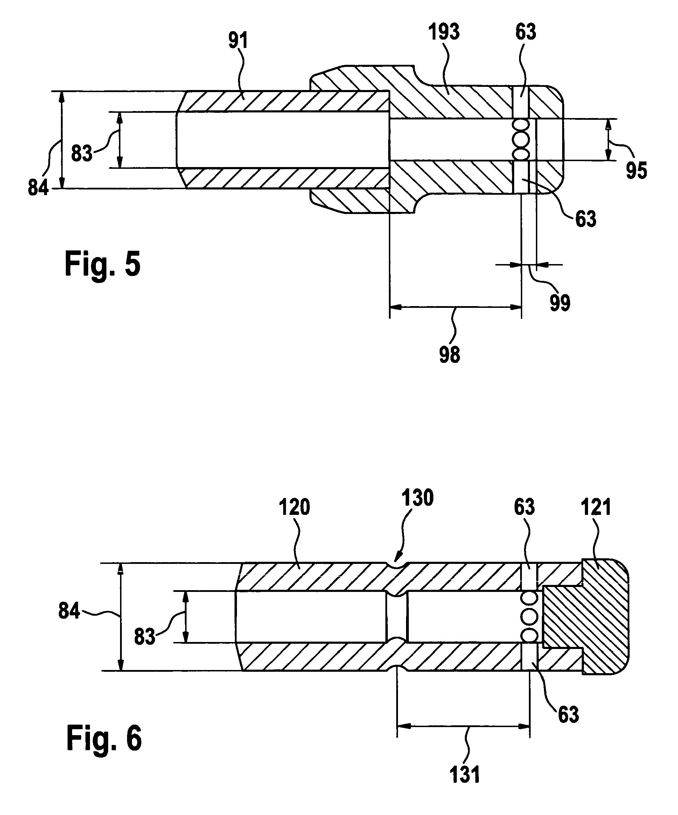

Das Dosierrohr nach Figur 5 weist im Vergleich zum Dosierrohr nach Figur 4 einen alternativen, schlanker ausgeführten Sprühkopf 193 auf. Die Bohrungslänge 98 ist hier größer, sie beträgt ca. 5 Millimeter. Der Abstand 99 der Sprühlöcher gerechnet von den Sprühlochmitten zum stirnseitigen Verschluss des Sprühkopfs beträgt zirka 0,5 Millimeter. Jenseits des Haltebereichs 194 des Sprühkopfs, in dem das stromabwärtige Ende des Rohrteils 91 eingeführt ist, geht der Sprühkopf im Unterschied zur Ausführung nach Figur 4 in einen durchmesserkleineren Bereich über, der den Bohrungsbereich mit der Länge 98 umfaßt.

In gleicher Weise wie beim Sprühkopf nach Figur 4 ergibt sich auch hier die Struktur mit positver Störkontur durch den stufenförmigen Übergang zwischen dem stromabwärtigen Ende des Innenraums des Dosierrohrteils 91 und dem durchmesserkleineren Bohrungsbereich des Sprühkopfs. Die Wirkung des Innenprofils des Dosierrohrs gemäß Figur 5 ist somit ähnlich wie bei dem Aufbau nach Figur 4.

Figur 6 zeigt eine weitere Dosierrohrvariante 120, bei der eine Quetschung 130 im Dosierrohrinnern zur Ausbildung einer positiven Störkontur geführt hat. Die Quetschung ist von den unmittelbar vor dem Verschlussstopfen 121 angeordneten Sprühlöchern 63 in einem Abstand 131 von zirka 5 Millimetern in die Dosierrohrwand eingebracht. Diese Quetschung ist durch Einklemmen des Dosierrohrs unter definiertem Druck erzeugt worden und resultiert in einer Eindellung im Dosierrohrinnern.

Die Quetschung 130 wirbelt einen darauf treffenden Wandfilm durcheinander und führt zu einer niedrigeren Temperatur in randnahen Bereichen des Wandfilms, so dass auch eine Quetschung 130 zur Vermeidung einer Auskristallisation eines Reaktionsmittels, insbesondere von Harnstoff, beitragen kann.

Die in den Ausführungsbeispielen beschriebene Struktur mit positiver Störkontur im Dosierrohr kann auch in anderen Leitungsbereichen bzw. in das Reaktionsmittel führenden Bereichen angewendet werden. Sie kann auch mit im Dosierrohr angeordneten Aufweitungsbereichen, wie beispielsweise einem im Bereich der Dosierlöcher stufenförmig vergrößerten Innendurchmesser des Dosierrohrs, kombiniert werden. Anstelle einer Spirale als Störkörper kann auch eine nicht oder nur unwesentlich drosselnde Mischeranordnung, beispielsweise ein Gitter oder ein an einem Ende mit der Dosierrohrwand verbundener Draht bzw. Blechstreifen eingesetzt werden. Auch eine innenliegende Metallhülse oder Ring können zur Erzeugung einer Struktur mit positiver Störkontur eingesetzt werden, der stromabwärts eine Struktur mit negativer Störkontur, also aufweitendem Strömungsquerschnitt, folgt. Es können zusätzlich weitere Maßnahmen zur Kristallisationsvermeidung vorgesehen sein, wie beispielsweise das Vorsehen von Zonen erhöhter Oberflächenrauhigkeit an der Innenwand von Leitungen bzw. des Dosierrohrs, auch Quernuten oder spiralförmige Nuten in der Dosierrohrinnenwand nach Art eines Gewindes oder eines Gewehrlaufs. Die Anwendung ist nicht auf die Verwendung einer Harnstoff-Wasser-Lösung beschränkt, sondern ist für jede Art von Reaktionsmittel von Interesse, bei der die Gefahr der Kristallisation und damit der Verstopfung besteht. Auch Abgasnachbehandlungsanordnungen sind von der Erfindung umfasst, bei denen das Reaktionsmittel ohne Transportgas in den Abgastrakt befördert wird. Auch hier kann das Vorsehen von Aufweitungsstrukturen in vorteilhafter Weise eine Verdampfung eines Bestandteils des Reaktionsmittels bzw. der Reaktionsmittellösung verhindern und somit eine Auskristallisation des eigentlichen reaktiven Bestandteils verhindern, insbesondere in Phasen, in denen die reaktionsmittelführenden Bereiche nach bereits erfolgter Dosierung zum Austreiben sich noch darin befindlichen Reaktionsmittels beispielsweise mit Luft ausgeblasen werden, oder bei denen beispielsweise durch Rückwärtsbetrieb der Dosierpumpe oder durch Inbetriebnahme einer anderen Pumpe noch in den Leitungen befindliches Reaktionsmittel herausgesaugt und durch Luft oder angesaugtes Abgas ersetzt wird. Die Grundform des Dosierrohrs kann auch von der beschriebenen 90 Grad Biegung abweichen, indem es beispielsweise schräg verlaufend in den Abgastrakt hineinragt und dementsprechend Winkel größer oder kleiner als 90 Grad vorgesehen sind, um einen Abschnitt des Dosierrohrs parallel zur Strömungsrichtung des Abgases verlaufen zu lassen. Des Weiteren sind auch solche Ausführungsformen des Dosierrohrs von der Erfindung umfasst, bei denen die Sprühlöcher sich in einem stirnseitigen Verschluß des Sprührohrs befinden bzw. bei denen die Sprühlöcher parallel zur Strömungsrichtung des Abgases oder schräg mit einem spitzen oder stumpfen Winkel relativ zur Strömungsrichtung des Abgases ausgerichtet sind. Alternativ kann das Dosierrohr auch senkrecht zur Wandung des Abgasrohrs in das Abgasrohr hineinragen und einen die Sprühlöcher umfassenden Abschnitt aufweisen, der schräg unter einem von Null verschiedenen Winkel relativ zur Hauptströmungsrichtung des Abgases verläuft, beispielsweise schräg nach unten, wenn das Dosierrohr mit seinem senkrechten Abschnitt von oben in das Abgasrohr hineinragt.

## Patentansprüche

1. Vorrichtung zum Nachbehandeln von Abgasen einer Brennkraftmaschine unter Verwendung eines in die Abgase einzubringenden Reaktionsmittels, insbesondere eines Reduktionsmittels, bei der das Reaktionsmittel aus einem Reaktionsmittelbehälter (1) über Leitungen (1a, 25) zu einer Dosiervorrichtung (7) und/oder zu einer Einbringungsstelle (63) befördert werden kann, so dass das Reaktionsmittel an der Einbringungsstelle dosiert in eine abgasführende Anordnung (30) der Brennkraftmaschine einbringbar ist, wobei zumindest an einer Stelle auf einer Innenwand der Leitungen und/oder der reaktionsmittelführenden Bereiche eine Struktur (65, 80, 93, 193, 130) mit einer positiven Störkontur angeordnet ist, so dass ein auf einer Innenwand der Leitungen bzw. der reaktionsmittelführenden Bereiche sich ausbildender gleichmässiger Fluß des Reaktionsmittels behindert wird, wobei der Gesamtfluß des Reaktionsmittels durch die Leitungen bzw. durch die reaktionsmittelführenden Bereiche durch die Struktur nicht oder nur unwesentlich gedrosselt wird, wobei die Leitungen ein in eine Abgasleitung ragendes Dosierrohr (61, 71, 91, 120) aufweisen, wobei das Dosierrohr die Einbringungsstelle in Form mindestens einer Dosieröffnung (63) umfasst, und dass sich die Struktur (65, 80, 93, 193, 130) im Dosierrohr befindet, wobei die Struktur durch einen in zumindest einer der Leitungen bzw. der reaktionsmittelführenden Bereiche eingebrachten Störkörper (65) gebildet ist, **dadurch gekennzeichnet, dass** der Störkörper eine Spiralform aufweist.

2. Vorrichtung nach Anspruch 1 **dadurch gekennzeichnet, dass** sich die Struktur nahe der Einbringungsstelle (63) befindet.

3. Vorrichtung nach einem der vorhergehenden Ansprüche, **dadurch gekennzeichnet, dass** die Struktur stufenförmig ausgebildet ist.

4. Vorrichtung nach einem der vorhergehenden Ansprüche, **dadurch gekennzeichnet, dass** die Struktur durch ein in die Leitung bzw. den reaktionsmittelführenden Bereich eingebrachtes Gewinde (193) gebildet ist.

5. Vorrichtung nach einem der vorhergehenden Ansprüche, **dadurch gekennzeichnet, dass** Mittel (20, 21, 22, 23, 24) zur Bereitstellung eines Gases, insbesondere Luft, zum Transport des Reaktionsmittels durch die Leitungen und/oder zur Spülung von Leitungen bzw. reaktionsmittelführenden Bereichen vorgesehen sind.

## Claims

1. Device for the aftertreatment of exhaust gases of an internal combustion engine using a reactant, in particular a reducing agent, which is to be introduced into the exhaust gases, in which the reactant can be conveyed from a reactant tank (1) via lines (1a, 25) to a metering device (7) and/or to an introduction site (63), such that the reactant can be introduced into an exhaust-gas-conducting arrangement (30) of the internal combustion engine in metered form at the introduction site, wherein a structure (65, 80, 93, 193, 130) having a positive interfering contour is arranged at least at one site on an inner wall of the lines and/or of the reactant-conducting regions, such that a uniform flow of the reactant which forms on an inner wall of the lines or of the reactant-conducting regions is impeded, wherein the overall flow of the reactant is not throttled or is throttled only insignificantly by the lines or by the reactant-conducting regions through the structure, wherein the lines have a metering tube (61, 71, 91, 120) which projects into an exhaust pipe, wherein the metering tube comprises the introduction site in the form of at least one metering opening (63), and wherein the structure (65, 80, 93, 193, 130) is located in the metering tube, wherein the structure is formed by an interfering body (65) which has been introduced into at least one of the lines or the reactant-conducting regions, **characterized in that** the interfering body has a spiral form.

2. Device according to Claim 1, **characterized in that** the structure is located close to the introduction site (63).

3. Device according to either of the preceding claims, **characterized in that** the structure has a stepped form.

4. Device according to one of the preceding claims, **characterized in that** the structure is formed by a thread (193) which has been introduced into the line or the reactant-conducting region.

5. Device according to one of the preceding claims, **characterized in that** means (20, 21, 22, 23, 24) for providing a gas, in particular air, for transporting the reactant through the lines and/or for purging lines or reactant-conducting regions are provided.

## Revendications

1. Dispositif pour le post-traitement des gaz d'échappement d'un moteur à combustion interne en utilisant un réactif devant être introduit dans les gaz d'échappement, notamment un agent réducteur, dans lequel le réactif peut être acheminé depuis un réservoir de réactif (1) par le biais de conduites (1a, 25) jusqu'à un dispositif de dosage (7) et/ou à un point d'introduction (63), de sorte que le réactif puisse être introduit au point d'introduction de manière dosée dans un agencement d'évacuation des gaz d'échappement (30) du moteur à combustion interne, une structure (65, 80, 93, 193, 130) avec un contour de perturbation positif étant disposée au moins en un endroit sur une paroi interne des conduites et/ou des régions guidant le réactif, de sorte qu'un flux uniforme du réactif se formant sur une paroi interne des conduites ou des régions guidant le réactif soit évité, le flux total du réactif à travers les conduites ou les régions guidant le réactif n'étant pas étranglé ou étant étranglé seulement de manière négligeable par la structure, les conduites présentant un tube de dosage (61, 71, 91, 120) saillant dans une conduite de gaz d'échappement, le tube de dosage comprenant le point d'introduction sous la forme d'au moins une ouverture de dosage (63) et la structure (65, 80, 93, 193, 130) se trouvant dans le tube de dosage, la structure étant formée par un corps perturbateur (65) introduit dans au moins l'une des conduites ou des régions guidant le réactif, **caractérisé en ce que** le corps perturbateur présente une forme en spirale.

2. Dispositif selon la revendication 1, **caractérisé en ce que** la structure se trouve à proximité du point d'introduction (63).

3. Dispositif selon l'une quelconque des revendications précédentes, **caractérisé en ce que** la structure est réalisée sous forme étagée.

4. Dispositif selon l'une quelconque des revendications précédentes, **caractérisé en ce que** la structure est formée par un filetage (193) pratiqué dans la conduite ou dans la région guidant le réactif.

5. Dispositif selon l'une quelconque des revendications précédentes, **caractérisé en ce que** des moyens (20, 21, 22, 23, 24) sont prévus pour fournir un gaz, notamment de l'air, pour le transport du réactif à travers les conduites et/ou pour le rinçage des conduites ou des régions guidant le réactif.
